# EUROPEAN PATENT APPLICATION

(11) **EP 1 876 252 A1**
(43) Date of publication of application: **09.01.2008**
(21) Application number: 06116799.5
(22) Date of filing: 07.07.2006
(51) Int. Cl.: C22C 23/00, C01B 3/00, B01J 20/20, B22F 1/00

(54) **Process for preparing composites comprising carbon and magnesium for hydrogen storage**

(71) Applicant: Advanced Chemical Technologies for Sustainability, 2509 AE Den Haag (NL)
(72) Inventor: Wagemans, Rudy Wilhelmus Peter Anorg. Chemie en, 3508 TB Utrecht (NL); De Jong, Krijn Peter Anorg. Chemie en, 3508 TB Utrecht (NL); Van Dillen, Adrianus Jacobus Anorg. Chemie en, 3508 TB Utrecht (NL); De Jongh, Petra Elisabeth Anorg. Chemie en, 3508 TB Utrecht (NL); Dauvillier, Bibiana Sibbeltje Altran Technologies, 3552 BJ Utrecht (NL)
(74) Representative: van Westenbrugge, Andries

(57) **Abstract**

The invention relates to a process for preparing carbon and magnesium comprising composites, comprising:
a) contacting a carbon material comprising pores with a pore diameter in the range 0.1 to 10x10⁻⁹ m with a molten metallic magnesium or magnesium alloy to obtain a intermediate composite; and
b) cooling the intermediate composite to obtain a carbon and magnesium comprising composite.

The invention further provides a carbon and magnesium comprising composite obtainable by the process of the invention, the use of a carbon and magnesium comprising composite obtainable by the process and a hydrogen storage system.

## Description

### Field of the invention

The invention relates to a process for preparing carbon and magnesium comprising composites, a carbon and magnesium comprising composite thus prepared, the use of a carbon and magnesium comprising composite for the storage of hydrogen and a hydrogen storage system.

### Background to the invention

Magnesium hydride is a promising material for the storage of hydrogen. Magnesium is cheap, abundantly available and is capable of storing up to 7.7 wt% of hydrogen through the formation of magnesium hydride. However, to date the commercial application of magnesium hydrides as hydrogen storage material has been limited due to unfavourable thermodynamic and kinetic aspects of the hydriding/dehydriding reaction. These reactions require temperatures in the range of 350 to 400 °C and pressures up to 30 bar in order to achieve an acceptable rate of loading or unloading of the hydrogen. Such severe conditions restrict the application of these materials in combination with for instance fuel cells, which operate at temperatures in the range of 100-250 °C.

The sorption kinetics of magnesium (charging times) can be improved by adding catalysts, alloying and/or reducing grain sizes by ball milling. The sorption thermodynamics are not affected by such techniques. It has been shown that the hydrogen desorption enthalpy of magnesium hydride can be decreased by reducing the crystal size below 10×10⁻⁹ m, presenting an option to lower the desorption temperature below 300 °C for bulk-magnesium hydride. Such a decrease of the hydrogen desorption enthalpy may be for instance caused by quantum size effects, e.g. described in R.W.P.Wagemans, J.H.van Lenthe, P.E.de Jongh, A.J.van Dillen, K.P.de Jong, J.Am.Chem.Soc., 127 (2005), p16675. Other examples are physical confinement of the magnesium in a matrix or interaction with the matrix or other materials, such as carbon.

The preparation of magnesium particles with a size below 10x10⁻⁹ m is not straightforward. Particles with such a small diameter cannot be obtained by for instance ball-milling or comparable mechanical treatments. Metallic magnesium cannot readily be obtained from an ionic magnesium comprising precursor either.

Magnesium particles can be prepared by for instance gas phase coalescence methods. However, magnesium particles of a size below 5x10⁻⁹ m are instable and form clusters or agglomerates. Such particles can be stabilised by depositing them on a suitable support, like for instance a carbon support.

US2004/0213998 A1 discloses a method for forming a hydrogen storage system by depositing a hydrogen storage material, such as magnesium, on the exterior surface of a support by thermally spraying the deposit on the support. In this method the hydrogen storage material is first melted and subsequently vaporised and atomised. However, this requires the use of plasmas with temperatures up to 7000 °C and only the exterior surface of the support is used.

JP2004/261739 discloses a method for filling carbon nanotubes and activated carbon structures obtained from carbonated coconuts shell with magnesium or a magnesium alloy. Intrusion of the magnesium (alloy) is achieved by contacting the carbon material with a magnesium (alloy) vapour. The disclosed method requires the energy consuming formation of a magnesium (alloy) vapour. The use of such magnesium comprising vapours limits the application of this process on a large scale.

There is a need in the art for a process for preparing hydrogen storage materials comprising magnesium supported on a carbon material without the use of magnesium comprising vapours.

### Summary of the Invention

It has now surprisingly been found that hydrogen storage materials comprising magnesium supported in a carbon material can be prepared using a molten metallic magnesium or magnesium alloy.

Accordingly, the present invention provides a process for preparing carbon and magnesium comprising composites, comprising:
a) contacting a carbon material comprising pores with a pore diameter in the range 0.1 to 10x10⁻⁹ m with a molten metallic magnesium or magnesium alloy to obtain a intermediate composite; and
b) cooling the intermediate composite to obtain a carbon and magnesium comprising composite.

It was found that molten metallic magnesium or magnesium alloy intrudes into the pores of the carbon material under the influence of capillary forces. When the intermediate composite is cooled, the molten metallic magnesium or magnesium alloy solidifies in the pores of the carbon material. There is no need for the metallic magnesium or magnesium alloy to be in its vapour or gas phase prior to or during the intrusion step (a).

The invention provides in a further aspect a carbon and magnesium comprising composite obtainable by the process of the invention.

In a still further aspect, the invention provides the use of a carbon and magnesium comprising composite obtainable by the process of the invention for storing hydrogen.

In another further aspect, the invention provides a hydrogen storage system comprising a container comprising the carbon and magnesium comprising composite obtainable by the process of the invention.

### Detailed description of the invention

The process according to the present invention is a process for preparing carbon and magnesium comprising composites. In this process a carbon material comprising pores with a pore diameter in the range 0.1 to 10x10⁻⁹ m is contacted with a molten metallic magnesium or magnesium alloy. Reference herein to pores is to volume available for metallic magnesium or magnesium alloy intrusion, such as pores of any shape (for instance round or slit shaped), inter-crystalline cavities, volume confined inside the outer wall of a carbon nanotube. Reference herein to molten metallic magnesium or magnesium alloy is to a metallic magnesium or magnesium alloy having a viscosity that is low enough to intrude into the pores of the carbon material.

When pores have a diameter in the range of from 0.1 to 10x10⁻⁹ m, the molten metallic magnesium or magnesium alloy is drawn into the pores of the carbon material under the influence of capillary forces and an intermediate composite of carbon and molten metallic magnesium or magnesium alloy is obtained.

Cooling of the intermediate composite causes the molten metallic magnesium or magnesium alloy to solidify in the pores of carbon material. The resulting composite is a carbon material comprising pores in the range of from 0.1 to 10x10⁻⁹ m and confined therein solid metallic magnesium or magnesium alloy agglomerates or particulates having a diameter not exceeding the diameter of the pore they are confined in.

Preferably, prior to step a), the carbon material with a pore diameter in the range of from 0.1 to 10x10⁻⁹ m is mixed with a solid metallic magnesium or magnesium alloy or a hydride thereof to form a physical mixture. Preferably, the carbon material is mixed with solid metallic magnesium hydride or magnesium alloy hydride. The hydride form of the metallic magnesium and magnesium alloys is less sensitive to, for instance, oxidation under air than the metallic magnesium and magnesium alloy.

The carbon material may be mixed in step i) with solid metallic magnesium or magnesium alloy in any form or shape. It will be appreciated that the contact between the carbon material and the solid metallic magnesium or magnesium alloy is improved when the solid metallic magnesium or magnesium alloy is in the form of particulates. Preferably, the solid metallic magnesium or magnesium alloy is in the form of particulates having an average particulate diameter of in the range of from 0.1 to 10x10⁻³ m.

The carbon material and the metallic magnesium or magnesium alloy may be mixed using any physical mixing technique known in the art, such as ball-milling, hot or cold pressing or grinding.

Preferably, the physical mixture is subsequently heated (step ii)) to a temperature to obtain the molten metallic magnesium or magnesium alloy. It will be appreciated that when the magnesium hydride of magnesium alloy hydride is heated, the hydrides may decompose into metallic magnesium or magnesium alloy and hydrogen.

The temperature profile during heating may be controlled to allow for the removal of vaporisable contaminants such as water. In case a solid magnesium hydride or magnesium alloy hydride is mixed with the carbon material, the magnesium hydride or magnesium alloy hydride will decompose into metallic magnesium or magnesium alloy and hydrogen. The temperature profile must then allow for the removal of evolving hydrogen or other gases.

Due to the reactive nature of magnesium, which increases when magnesium is in its molten or vapour phase, it is preferred that the process is performed in a controlled atmosphere. The atmosphere may be different dependent on the stage of the process. Preferably, during step a) and step ii) the carbon material and molten metallic magnesium or magnesium alloy are contacted under a vacuum atmosphere or an atmosphere that does not irreversibly react with the molten metallic magnesium or magnesium alloy. More preferably, the atmosphere is a noble gas (e.g. helium, neon, argon, krypton or radon), hydrogen or a mixture thereof, more preferably helium or argon. The use of oxygen or nitrogen comprising atmospheres or further oxidative atmospheres should be avoided as they may irreversibly react with the molten metallic magnesium or magnesium alloy. The same applies *mutatis mutandis* for step ii).

Preferably, the intermediate composite is cooled (step b)) under a vacuum atmosphere or an atmosphere that does not irreversibly react with the metallic magnesium or magnesium alloy. More preferably, the atmosphere is a noble gas (e.g. helium, neon, argon, krypton or radon), hydrogen or a mixture thereof. It is preferred to introduce hydrogen to the atmosphere during cooling when the temperature of the intermediate composite is in the range of from 500 to 150 °C, more preferably 300 to 400 °C. A hydrogen-comprising atmosphere may facilitate the formation of a magnesium hydride or magnesium alloy hydride. The use of oxygen or nitrogen comprising atmospheres or oxidative atmospheres should be avoided as they may irreversibly react with the metallic magnesium or magnesium alloy.

It may be advantageous to perform the mixing of the carbon material and the solid metallic magnesium or magnesium alloy in an atmosphere that does not irreversibly react with the metallic magnesium or magnesium alloy. As the particulate diameter of the metallic magnesium or magnesium alloy is reduced, the surface area increases and as a consequence the reactivity towards for instance oxygen or water may also increase. Suitable atmospheres consist for instance of noble gases (e.g. helium, neon, argon, krypton or radon), nitrogen, hydrogen or a mixture thereof.

The carbon material may be any carbon material comprising pores with a diameter in the range of from 0.1 to 10x10⁻⁹ m. Preferably, the carbon material has a high porosity, more preferably a porosity in the range of from 0.3 to 2.0 cm³/g. The porosity is important as it determines the maximum available metallic magnesium or magnesium alloy loading, i.e. the amount, in wt%, of metallic magnesium or magnesium alloy in the carbon material. Suitable carbon materials comprise porous carbon, such as activated carbon, carbon black, carbon nanofibres, carbon nanotubes, ordered mesoporous carbon, graphitic carbon and pyrolitic carbon. Preferably, the carbon material is an activated carbon. Such activated carbons comprise a three-dimensional pore structure and may also comprise larger pores. These characteristics may favourably facilitate the transport of hydrogen inside the carbon and magnesium comprising composite. The carbon material may be of synthetic (e.g. polymeric precursor or CVD) or natural (e.g. coconut shells, peat, etc) origin. Depending on the origin and/or preparation process of the carbon materials trace amounts of other elements may be present in the carbon material, typically less than 10 wt%. It can be beneficial, when the surface of the carbon material comprises nitrogen or boron, e.g. in the range of from 1 to 20% of nitrogen or boron as for example determined by X-ray Photoelectron Spectroscopy. The presence of nitrogen or boron on the surface of the carbon may improve the intrusion of the metallic magnesium or magnesium alloys.

It is known that magnesium reacts irreversibly with alumina, silica, titania, iron oxide or other oxides, while forming very stable compounds like for instance magnesium oxide. If magnesium is in its liquid or vapour state the reactivity increases even further. When the surface of a magnesium particle is contacted with, for instance silica, a thin layer of magnesium oxide is formed on the surface. This oxide layer can have a thickness up to 10x10⁻⁹m. Therefore, the presence of a significant amount of such materials, i.e. alumina, silica, iron oxide or other oxides, should be avoided unless there is a specific reason for their presence. Such a reason could for instance be the desire to introduce metallic aluminium in the carbon at the cost of sacrificing part of the metallic magnesium.

The carbon material should comprise pores with a pore diameter up to 10×10⁻⁹ m. Preferably, the carbon material comprises pores with a pore diameter in the range of from 0.1 to 10x10⁻⁹ m, more preferably 0.1 to 8x10⁻⁹ m, even more preferably 0.1 to 5x10⁻⁹ m, still more preferably of from 0.1 to 3x10⁻⁹ m. As the pore diameter decreases, the capillary forces increase and assist the intrusion of the metallic magnesium or magnesium alloy into the pores. Furthermore, the pore diameter determines the diameter of the metallic magnesium or metallic alloy agglomerates or particulate confined in the pore. As the diameter of the metallic magnesium or metallic alloy agglomerates or particulates decreases, the hydrogen desorption enthalpy of magnesium hydride may decrease.

The carbon material may comprise pores of any diameter. Preferably, the carbon material comprises pores of which 30% to 99.9%, more preferably of from 50% to 99.9% have a pore diameter in the range of from 0.1 to 10×10⁻⁹ m, preferably in the range of from 0.1 to 5x10⁻⁹ m. An increase in the fraction of pores that have diameters in the preferred range, results in an increase in the number of preferred metallic magnesium or metallic alloy agglomerates or particulates formed in the pores of the carbon material.

The carbon material may be contacted with the molten or solid metallic magnesium or magnesium alloy in any shape or form. Preferably, the carbon material is in the form of particulates. More preferably, the carbon material is in the form of particulates having an average particulate diameter in the range of from 0.1 to 10×10⁻³ m. Examples of suitable particulates are granulates, pellets, spheres, extrudates or any other porous carbon body.

To improve the intrusion of the molten metallic magnesium of magnesium alloy into the pores of the carbon material it may be advantageous to pre-treat the carbon material, preferably a pre-treatment to introduce nitrogen or boron. An example of a suitable pre-treatment is a pre-treatment with ammonia or an aqueous solution thereof. For instance the carbon material may be dispersed in an aqueous solution of ammonia at elevated temperatures, e.g. the boiling temperature of the aqueous ammonia solution or the carbon material may be contacted with gaseous ammonia at elevated temperature and pressure. The ammonia may react with the carbon material modifying the carbon material surface to comprise nitrogen. Alternatively, the carbon material can be pre-treated to introduce boron by impregnating the carbon material with a melt or solution of NaBH₄, NH₄BH₄, KBF₄, NH₄BF₄ or NH₃BF₃, optionally followed by a heat treatment. Pre-treatment with oxidizing agents such as acids or peroxides should be avoided as such pre-treatments may lead to the introduction of oxygen in the carbon material.

Prior to contacting the carbon material with the molten metallic magnesium or magnesium alloy (step a), the carbon material may already comprise an additional metal, preferably group IA and IB, group IIIA and IIIB, group IVB, group VB, group VIB, group VIIB, or Group VIII metal or a mixture thereof, more preferably aluminium, chromium, copper, gold, iridium, lithium, manganese, nickel, platinum, palladium, ruthenium, rhodium, scandium, titanium, vanadium, yttrium or a mixture thereof, even more preferably aluminium, lithium, chromium, palladium, vanadium or a mixture thereof. It will be appreciated that the additional metals may have several and different effects or functions within the composite. Without binding to any theory, such additional metals may improve the intrusion of the metallic magnesium or magnesium alloy, due to an improved wetting of the carbon material by the molten metallic magnesium or magnesium alloy. It may also improve the interaction/adhesion of the magnesium with the carbon matrix, leading to higher stability of the metallic magnesium or magnesium alloy particulates in the composite during cooling and hydrogen cycling. Also, the additional metal may interact with the metallic magnesium and/or magnesium alloy to improve the hydrogen (de)sorption process. For instance, nickel might lower hydrogen uptake/release temperature and palladium catalyses hydrogen uptake/release. The additional metal may be present in the carbon material as a metal hydride or metal oxide. As mentioned hereinabove, the introduction of a metal oxide may lead to the formation of magnesium oxide. Magnesium oxide is a solid at the process temperatures. Therefore, independent of the generally unfavourable conversion of metallic magnesium or magnesium alloy in their respective oxides, the formation of magnesium oxide may lead to blocking of the pores. It will, therefore, be appreciated that this limits the amount of metal oxide that may be introduced, in addition to the trace amounts of other elements herein above, preferably less than 10 wt%, more preferably less than 5 wt%, of the intruded metallic magnesium or magnesium alloy. The additional metal, metal hydride or metal oxide may be introduced into the carbon using any suitable method known in the art, such as impregnation, ion-exchange, homogeneous deposition precipitation, optionally followed by a reduction step.

The carbon material is contacted with molten metallic magnesium or magnesium alloy or a mixture thereof. If the carbon material is contacted with a magnesium alloy, the magnesium alloy is preferably chosen from a magnesium-aluminium alloy, magnesium-nickel alloy, magnesium-scandium alloy, magnesium-titanium alloy or a mixture thereof, more preferably a magnesium-aluminium alloy, magnesium-nickel alloy or a mixture thereof.

Comparable to the effect of the additional metal, metal hydride or metal oxide mentioned hereinabove, the magnesium alloy may comprise metals, which may interact with the magnesium to improve the hydrogen (de)sorption process.

The molten metallic magnesium or magnesium alloy may comprise an additional metal other than aluminium, nickel, scandium or titanium, preferably a group IA and IB, group IIIA and IIIB, group IVB, group VB, group VIB, group VIIB, or Group VIII metal or a mixture thereof, more preferably chromium, copper, gold, iridium, lithium, manganese, platinum, palladium, ruthenium, rhodium, vanadium, yttrium or a mixture thereof even more preferably aluminium, lithium, chromium, palladium, vanadium or a mixture thereof. Such metals do not typically form alloys with magnesium and are typically solid under the process conditions of the present invention. Preferably, the additional metal is present in the molten metallic magnesium or magnesium alloy in the form of particulates. Preferably, the additional metal is present particulates with a particulate diameter below 10×10⁻⁹ m, more preferably in the range of from 0.1 to 10x10⁻⁹ m, even more preferably 0.1 to 2x10⁻⁹ m. It will be appreciated that for particulates with a particulate diameter in the nanometer range, a reduced melt temperature may be observed.

The carbon material is contacted with molten metallic magnesium or magnesium alloy or a mixture thereof. The temperature of the molten metallic magnesium or magnesium alloy will be close to the melt temperature of the metallic magnesium or magnesium alloy. Typically, a temperature up to 50°C above the melting temperature of the metallic magnesium or magnesium alloy will be sufficient to ensure that all metallic magnesium or magnesium alloy is molten. Preferably, the temperature of the metallic magnesium or magnesium alloy is not higher than a temperature of 30°C, more preferably 15°C, above the melting temperature of the metallic magnesium or magnesium alloy.

The process according to the invention may be performed at elevated pressure. Preferably, step a) and b) are individually performed in an atmosphere having an elevated pressure. More preferably, the pressures in step a) and b) are in the range of from 1 to 50 bara, more preferably 1 to 20 bara, even more preferably 1 to 5 bara.

The intrusion process may be a pressure-infiltration process wherein the carbon material and molten metallic magnesium are subjected to pressures up to 15000 bara.

The process according to the invention may further comprise a step c), wherein the carbon and magnesium composite of step b) is contacted with a liquid or vapour comprising an additional metal in metallic or ionic form. Preferably, the liquid or vapour comprises a group IA and IB, group IIIA and IIIB, group IVB, group VB, group VIB, group VIIB, or Group VIII metal or a mixture thereof, more preferably aluminium, chromium, copper, gold, iridium, lithium, manganese, nickel, platinum, palladium, ruthenium, rhodium, scandium, titanium, vanadium, yttrium or a mixture thereof, even more preferably aluminium, lithium, chromium, palladium, vanadium or a mixture thereof. If the additional metal is in its ionic form it may be reduced to form metallic metal. The additional metal is deposited on the surface of the composite and may interact with the magnesium to improve the hydrogen (de)sorption process. Also, the additional metal may interact with hydrogen causing or catalysing the split of the hydrogen molecule.

The invention also relates to carbon and magnesium comprising composites obtainable by the process according to the present invention.

If an active carbon is used as the carbon material, a carbon and magnesium comprising composite may be obtained, comprising an activated carbon and a metallic magnesium or a magnesium alloy, wherein the composite comprises activated carbon comprising pores having a pore diameter in the range 0.2 to 10×10⁻⁹ m, which pores comprise metallic magnesium or magnesium alloy.

The carbon and magnesium comprising composites comprise metallic magnesium or magnesium alloy particulates with a particulate diameter in the range 0.2 to 10x10⁻⁹ m, as determined using Transmission Electron Microscopy. It will be appreciated that due to the atomic diameter of magnesium it is not possible to form metallic magnesium or magnesium alloy particulates with a diameter below 0.2x10⁻⁹m. The composite according to the invention comprises metallic magnesium or magnesium alloy particulates with a diameter below 10x10⁻⁹ m, providing a material with potentially favourably hydrogen (de)sorption properties. As the metallic magnesium or magnesium alloy particulates are confined in the pores of the carbon material agglomeration of the metallic magnesium or magnesium alloy particulates is prevented. It will be appreciated that the geometry of the particulates may vary depending for instance on the location within the carbon material and the degree of metallic magnesium or magnesium alloy loading (wt% of metallic magnesium or magnesium alloy in the composite). Typically, the geometry of the metallic magnesium or magnesium alloy particulate may be a spherical, octahedric, cubic or a cylindrical shape or elongated form thereof. As the loading of the composite increased or the diameter of the pores decreased the pores will become increasingly filled with metallic magnesium or magnesium alloy. As a consequence, the metallic magnesium or magnesium alloy particulate geometry may assimilate, at least partly, the geometry of the pore.

Preferably, the carbon and magnesium comprising composites comprises magnesium hydride or a magnesium alloy hydride.

Preferably, the carbon and magnesium comprising composites comprises up to 90 wt%, more preferably in the range of from 15 to 70 wt%, of metallic magnesium or magnesium alloy.

The carbon and magnesium comprising composites obtainable by the process according to the present invention are particularly suitable for use as storage material for storing hydrogen. The carbon and magnesium comprising composites can be reversibly used for storing hydrogen by sequentially performing the absorption and desorption of hydrogen. Due to the fact the carbon and magnesium comprising composites comprise small metallic magnesium or magnesium alloy particulates, the carbon and magnesium comprising composites allow for (de)sorption of hydrogen at temperatures below 300 °C.

The carbon and magnesium comprising composites obtainable by the process according to the presented invention can be confined in a suitable container to provide a hydrogen storage system. Such a hydrogen storage system shows an improved hydrogen storage capacity compared to hydrogen storage systems comprising no hydrogen storage material.

### Examples:

### Example 1:

A carbon and magnesium composite was prepared using:
- MgH₂ powder (ex. Goldschmidt GmbH, "Tego Magnan") (average particulate diameter 50x10⁻⁶ m);
- commercially available high-purity carbon matrix (ex. Norit, "R2030CO2"), 99.5 wt% carbon, total pore volume 0.450 cm³/g, micropore (<2.0 x10⁻⁹ m) volume 0.319 cm³/g.

### Procedure:

1 gram carbon was mixed with 0.5 gram MgH₂ by grinding under nitrogen atmosphere. The mixture was heated to 625 °C with 2.5 °C/min, and kept there for 10 min before heating further to 666 °C with 1 °C /min in an Ar atmosphere with an Ar flow of 30 ml/min. Upon cooling down the atmosphere was switched to 30 ml/min hydrogen at 350 °C.

### Characterisation:

The sample was characterised using nitrogen physisorption and Transmission Electron Microscopy combined with Energy-Dispersive X-Ray spectroscopy (EDX) elemental analysis. Before characterization, the samples were crushed by hand in a mortar under nitrogen atmosphere.

Nitrogen physisorption measurements were performed at 77 K using a Micromeritics Tristar 3000 apparatus. The samples were dried in helium flow for 14 hours at 120 °C prior to analysis.

STEM images combined with EDX elemental composition results were obtained using a Tecnai 20 FEG microscope operating at 200 kV. TEM sample preparation consisted of placing a small amount of sample powder on a holy-carbon film on a copper grid, under air. The results are reported in Table 1.

### Example 2:

A carbon and magnesium composite was prepared using:
- MgH₂ powder (ex. Goldschmidt GmbH, "Tego Magnan") (average particulate diameter 50x10⁻⁶ m) ;
- commercially available high-purity carbon matrix (ex. Norit, "ROZ 3 A8332"), total pore volume 0.531 cm³/g, micropore (<2.0 x10⁻⁹ m) volume 0.277 cm³/g. This carbon contained about 10 wt% oxygen.

### Pre-treatment:

5 gram of carbon was first milled in a mortar and then boiled under reflux in 600 ml of a 25 vol% aqueous ammonia solution for one hour. The sample was filtered over a Buchner funnel, and washed with water until the filtrate had a neutral pH. The sample was washed with methanol, and dried overnight at 120 °C.

### Procedure:

0.5 gram of this carbon was mixed with 0.45 gram of magnesium under ambient atmosphere. The sample was heated to 400 °C with 2.5 °C/min, and kept there for 10 min before heating further to 666 °C with 1 °C/min under an Ar atmosphere with an Ar flow of 30 ml/min.

### Characterisation:

The sample was characterised using nitrogen physisorption and Transmission Electron Microscopy (TEM) combined with Energy-Dispersive X-Ray spectroscopy (EDX) elemental analysis. Before characterization, the samples were crushed by hand in a mortar under nitrogen atmosphere.

Nitrogen physisorption measurements were performed at 77 K using a Micromeritics Tristar 3000 apparatus. The samples were dried in helium flow for 14 hours at 120 °C prior to analysis.

STEM images were obtained using a Tecnai 20 FEG microscope operating at 200 kV. A small amount of sample powder was placed on a holy-carbon film on a copper grid. The samples were transported to the TEM under air.

The results are reported in Table 1.

**Table 1**

| Example | total pore volume before Mg intrusion | total pore volume after Mg intrusion | micropore (<2.0x10⁻⁹ m) volume before Mg intrusion | micropore (<2.0x10⁻⁹ m) volume after Mg intrusion | Mg particulate diameter |
|---|---|---|---|---|---|
| | cm³/g carbon | cm³/g carbon | cm³/g carbon | cm³/g carbon | X10⁻⁹ m |
| 1 | 0.450 | 0.324 | 0.319 | 0.253 | < 3 |
| 2 | 0.531 | | 0.277 | | 2-5 |

### Example 3:

The nitrogen physisorption was determined before and after intrusion of the porous carbon with molten magnesium. Subsequently, the magnesium was removed from the carbon material by leaching the magnesium with diluted HCl. Most of the original pore volume of the carbon is recovered, indicating that the loss of pore volume is not due to a collapse of the porous structure of the carbon. The results are shown in table 2

**Table 2**

| Example | total pore volume before Mg intrusion | total pore volume after Mg intrusion | total pore volume after HCl leaching |
|---|---|---|---|
| | cm³/g carbon | cm³/g carbon | cm³/g carbon |
| 1 | 0.450 | 0.324 | 0.435 |

## Claims

1. A process for preparing carbon and magnesium comprising composites, comprising:
a) contacting a carbon material comprising pores with a pore diameter in the range 0.1 to 10x10⁻⁹ m with a molten metallic magnesium or magnesium alloy to obtain an intermediate composite;
b) cooling the intermediate composite to obtain a carbon and magnesium comprising composite.

2. A process according to claim 1, further comprising prior to step a):
i) mixing the carbon material with a solid metallic magnesium, a magnesium alloy or a hydride thereof to form a physical mixture; and
ii) heating the physical mixture to a temperature to obtain the carbon material and the molten metallic magnesium or magnesium alloy.

3. A process according to claim 1 or 2, wherein the pore diameter is in the range of from 0.1 to 8x10⁻⁹ m, preferably 0.1 to 5x10⁻⁹ m, more preferably of from 0.1 to 3x10⁻⁹ m.

4. A process according to any one of claims 1 to 3, wherein 30% to 99.9%, preferably of from 50% to 99.9, of the pores have a pore diameter in the range of from 0.1 to 5x10⁻⁹ m.

5. A process according to any one of claims 1 to 4, wherein the carbon material is an activated carbon.

6. A process according to any one of claims 1 to 5, wherein the carbon material is pre-treated, preferably with ammonia or boron.

7. Process according to claims 1 to 6, wherein the carbon material comprises an additional metal, preferably aluminium, chromium, copper, gold, iridium, lithium, manganese, nickel, platinum, palladium, ruthenium, rhodium, scandium, titanium, vanadium, yttrium or a mixture thereof, more preferably aluminium, lithium, chromium, palladium, vanadium or a mixture thereof.

8. A process according to any one of claims 1 to 7, wherein in step (a) the carbon material is mixed with a magnesium alloy and the magnesium alloy is a magnesium-aluminium alloy, magnesium-nickel alloy, magnesium-scandium alloy, magnesium-titanium alloy or a mixture, preferably a magnesium-aluminium alloy, magnesium-nickel alloy or a mixture thereof.

9. A process according to any one of claims 1 to 8, wherein the intermediate composite is cooled in the presence of hydrogen.

10. A process according to any one of claims 1 to 9, wherein step a) and step b) are individually performed in an atmosphere having an elevated pressure.

11. A process according to any one of claims 2 to 10, wherein step i) and step ii) are individually performed at elevated pressure.

12. A process according to any one of claims 1 to 11, further comprising a step c), wherein the carbon and magnesium comprising composite obtained in step b) is contacted with a liquid or vapour comprising aluminium, chromium, copper, gold, iridium, lithium, manganese, nickel, platinum, palladium, ruthenium, rhodium, scandium, titanium, vanadium, yttrium or a mixture thereof even more preferably aluminium, lithium, chromium, palladium, vanadium or a mixture thereof.

13. A carbon and magnesium comprising composite obtainable by the process according to any one of claims 1 to 13

14. A carbon and magnesium comprising composite according to claim 13, comprising metallic magnesium or magnesium alloy particulates with a particulate size in the range 0.2 to 5x10⁻⁹ m.

15. A carbon and magnesium comprising composite according to claim 13 or 14, wherein the carbon and magnesium comprising composite comprises magnesium hydride or a magnesium alloy hydride.

16. A carbon and magnesium comprising composite according to any one of claims 13 to 15, wherein the composite comprises up to 90 wt%, preferably in the range of from 15 to 70wt%, of metallic magnesium or magnesium alloy.

17. Use of a carbon and magnesium comprising composite obtainable by the process according to any one of claims 1 to 12 as storing material for storing hydrogen.

18. Hydrogen storage system comprising a container comprising a carbon and magnesium comprising composite obtainable by the process according to any one of claims 1 to 12.
